# EUROPEAN PATENT APPLICATION

(11) **EP 3 950 352 A1**
(43) Date of publication of application: **09.02.2022**
(21) Application number: 21184432.9
(22) Date of filing: 08.07.2021
(51) Int. Cl.: B33Y 10/00, B28B 1/00, B33Y 30/00, B33Y 80/00, C04B 35/111, C04B 35/185, C04B 35/56, C04B 35/565, C04B 35/581, C04B 35/584, C04B 35/626, C04B 35/634, C04B 35/638, B29C 64/165

(54) **THREE-DIMENSIONAL OBJECT PRODUCING METHOD, THREE-DIMENSIONAL OBJECT PRODUCING APPARATUS, AND THREE-DIMENSIONAL OBJECT**

(30) Priority: 31.07.2020 JP 2020130063
(71) Applicant: Ricoh Company, Ltd., Tokyo 143-8555 (JP)
(72) Inventor: KAMODA, Kiichi, Tokyo (JP); MIYAZAKI, Kohsuke, Tokyo (JP)
(74) Representative: SSM Sandmair

(57) **Abstract**

Provided is a three-dimensional object producing method for producing a three-dimensional object using primary particles containing at least a ceramic material, the three-dimensional object producing method including: a forming step of forming a layer using secondary particles containing the primary particles and a binder resin; and an applying step of applying a liquid for dissolving the binder resin to the layer formed in the forming step, wherein a central particle diameter of the primary particles is 5 micrometers or less, wherein the liquid contains inorganic particles.

## Description

### BACKGROUND OF THE INVENTION

### Field of the Invention

The present disclosure relates to a three-dimensional object producing method, a three-dimensional object producing apparatus, and a three-dimensional object.

### Description of the Related Art

Recently, resin powders such as one that is described in, for example, Japanese Patent No. 6520182 have been known as resin powders for producing complicated, minute three-dimensional objects. However, it has been difficult to obtain highly accurate, high-density ceramic sintered bodies even when objects are produced with the resin powder described in Japanese Patent No. 6520182.

### SUMMARY OF THE INVENTION

According to an aspect of the present disclosure, a three-dimensional object producing method for producing a three-dimensional object using primary particles containing at least a ceramic material includes a forming step of forming a layer using secondary particles containing the primary particles and a binder resin, and an applying step of applying a liquid for dissolving the binder resin to the layer formed in the forming step. A central particle diameter of the primary particles is 5 micrometers or less.

### BRIEF DESCRIPTION OF THE DRAWINGS

FIG. 1 is a conceptual diagram illustrating an example of a three-dimensional object producing method;
FIG. 2 is a flowchart illustrating an example of a flow of a process of a three-dimensional object producing method;
FIG. 3 is a functional block diagram illustrating an example of a three-dimensional object producing apparatus;
FIG. 4A is a schematic diagram (part 1) illustrating an example of a three-dimensional object producing method;
FIG. 4B is a schematic diagram (part 2) illustrating an example of a three-dimensional object producing method;
FIG. 4C is a schematic diagram (part 3) illustrating an example of a three-dimensional object producing method;
FIG. 4D is a schematic diagram (part 4) illustrating an example of a three-dimensional object producing method;
FIG. 4E is a schematic diagram (part 5) illustrating an example of a three-dimensional object producing method; and
FIG. 4F is a schematic diagram (part 6) illustrating an example of a three-dimensional object producing method.

### DESCRIPTION OF THE EMBODIMENTS

### (Three-dimensional object producing method and three-dimensional object producing apparatus)

A three-dimensional object producing method of the present disclosure is a method for producing a three-dimensional object using primary particles containing at least a ceramic material, and includes a forming step of forming a layer using secondary particles containing the primary particles and a binder resin, and an applying step of applying a liquid for dissolving the binder resin to the layer formed in the forming step. A central particle diameter of the primary particles is 5 micrometers or less. The three-dimensional object producing method further includes other steps as needed.

A three-dimensional object producing apparatus of the present disclosure is an apparatus configured to produce a three-dimensional object using primary particles containing at least a ceramic material, and includes a forming unit configured to form a layer using secondary particles containing the primary particles and a binder resin, and an applying unit configured to apply a liquid for dissolving the binder resin to the layer formed by the forming unit. A central particle diameter of the primary particles is 5 micrometers or less. The three-dimensional object producing apparatus further includes other units as needed.

The three-dimensional object producing method of the present disclosure can be suitably performed by the three-dimensional object producing apparatus of the present disclosure. The forming step can be performed by the forming unit. The applying step can be performed by the applying unit. The other steps can be performed by the other units.

The present disclosure has an object to provide a three-dimensional object producing method that can obtain a highly accurate, high-density ceramic sintered body.

The present disclosure can provide a three-dimensional object producing method that can obtain a highly accurate, high-density ceramic sintered body.

The present disclosure granulates ceramic primary particles having a small particle diameter of a nano order into secondary particles using a binder resin, forms a powder layer using the secondary particles, and applies a liquid for dissolving the binder resin to the surface of the powder layer to return the secondary particles to the primary particles and promote densification. In this way, the present disclosure can produce a high-density green body. Hence, the present disclosure can suppress occurrence of internal flaws in the green body and obtain a sintered body having a high strength, as well as suppressing cracking and deformation in any heat treatment steps such as degreasing and sintering and obtaining a ceramic sintered body having a high shape accuracy.

Moreover, the present disclosure can obtain a high-density ceramic sintered body of even a shape having a thickness of some centimeters, without, for example, deformation and cracking.

The followings are used as the definitions of the terms used in the present disclosure.

In the present disclosure, "three-dimensional object production" means the steps to take until a green body, which has not yet been subjected to a degreasing step, is produced. In the present disclosure, a "green body" means an object formed of a ceramic, a binder resin, and a solvent, formed through repetition of the forming step and the applying step. In the present disclosure, a "three-dimensional object" mainly means a part that has been through all steps involved, i.e., a part in a state obtained through degreasing and sintering.

The three-dimensional object producing method of the present disclosure includes a forming step and an applying step, and further includes other steps as needed. Through repetition of the forming step and the applying step a predetermined number of times, a uniform, highly-accurate green body can be obtained.

The three-dimensional object producing apparatus of the present disclosure includes a forming unit and an applying unit, and further includes other units as needed.

### <Forming step and forming unit>

The forming step is a step of forming a layer using secondary particles containing primary particles and a binder resin, and is performed by a forming unit. The forming step is performed using secondary particles containing at least primary particles and a binder resin, and is a step of forming a powder layer and may be referred to as "powder layer forming step".

### -Primary particles-

The main component of the primary particles of the present disclosure is a ceramic. A ceramic means a sintered body obtained by heating and sintering an inorganic material.

For the ceramic to be the main component, the ceramic is contained in the primary particles in an amount greater than 50% by mass. The content of the ceramic in the primary particles is preferably 80% by mass or greater and more preferably 90% by mass or greater.

Examples of the raw material of the ceramic include glass, metal oxides, metal carbides, and metal nitrides.

Examples of the glass include silica glass (quartz glass) and soda lime silica glass.

Examples of the metal oxides include zirconia, alumina, and mullite (aluminosilicate mineral).

Examples of the metal carbides include silicon carbide and tungsten carbide.

Examples of the metal nitrides include silicon nitride and aluminum nitride.

One of these ceramics may be used alone or two or more of these ceramics may be used in combination. Among these ceramics, zirconia, alumina, mullite (aluminosilicate mineral), tungsten carbide, silicon carbide, silicon nitride, and aluminum nitride are preferable in terms of retaining a high strength.

The central particle diameter of the primary particles is 5 micrometers or less, preferably 1 micrometer or less, and yet more preferably 500 nm or less. The lower limit of the central particle diameter of the primary particles is preferably 5 nm or greater, more preferably 10 nm or greater, and yet more preferably 50 nm or greater.

When the central particle diameter of the primary particles is 5 micrometers or less, a high-density green body having few internal flaws can be produced.

The central particle diameter of the primary particles has the same meaning as the cumulative 50% volume-based particle diameter based on a volume-based particle size distribution and can be measured with, for example, a laser diffraction/scattering particle size measuring instrument (available from Horiba, Ltd., LA-300).

A powder for producing a three-dimensional object is produced by producing the secondary particles using the primary particles. Because the primary particles have a small particle diameter, the primary particles have a poor fluidity and a poor handleability. Hence, the primary particles are processed into the secondary particles in order to have a good handleability.

The method for producing the secondary particles is not particularly limited and may be appropriately selected depending on the intended purpose. Examples of the method include a method of mixing a binder resin with the primary particles by a known method.

The method for granulating the primary particles using a binder resin is not particularly limited and may be appropriately selected from known granulating methods. Examples of the method include a tumbling fluidized bed method, a spray drying method, a stirring granulating method, a dipping method, and a kneader coating method. These granulating methods can be performed with, for example, known commercially available various coating machines and granulators.

The secondary particles used for three-dimensional object production contains a binder resin. The binder resin is used for, for example, mutually binding the primary particles.

### -Binder resin-

The binder resin contained in the secondary particles contributes to, for example, mutually binding the primary particles, and binding surrounding ceramic particles again after the binder resin dissolves in a liquid when the liquid is dropped to the binder resin.

The kind of the binder resin is not particularly limited and may be appropriately selected depending on the intended purpose. Examples of the binder resin include acrylic, maleic acid, silicone, butyral, polyester, polyvinyl acetate, vinyl chloride/vinyl acetate copolymers, polyethylene, polypropylene, polyacetal, ethylene/vinyl acetate copolymers, ethylene/(meth)acrylic acid copolymers, α-olefin/maleic anhydride copolymers, esterified products of α-olefin/maleic anhydride copolymers, polystyrene, poly(meth)acrylic acid esters, copolymers of α-olefin/maleic anhydride/vinyl group-containing monomer, styrene/maleic anhydride copolymers, styrene/(meth)acrylic acid ester copolymers, polyamide, epoxy resins, xylene resins, ketone resins, petroleum resins, rosin or derivatives of rosin, coumarone-indene resins, terpene resins, polyurethane resins, synthetic rubbers such as styrene/butadiene rubbers, polyvinyl butyral, nitrile rubbers, acrylic rubbers, and ethylene/propylene rubbers, and nitrocellulose. One of these binder resins may be used alone or two or more of these binder resins may be used in combination.

The central particle diameter of the secondary particles is not particularly limited, may be appropriately selected depending on the intended purpose, and is preferably 50 micrometers or less, more preferably 40 micrometers or less, and particularly preferably 30 micrometers or less. The lower limit of the central particle diameter of the secondary particles is preferably 100 nm or greater, more preferably 500 nm or greater, and particularly preferably 1 micrometer or greater.

The central particle diameter of the secondary particles has the same meaning as the cumulative 50% volume-based particle diameter based on a volume-based particle size distribution and can be measured with, for example, a laser diffraction/scattering particle size measuring instrument (available from Horiba, Ltd., LA-300).

The content of the binder resin in the secondary particles is not particularly limited, may be appropriately selected depending on the intended purpose, and is preferably 50% by mass or less, more preferably 45% by mass or less, yet more preferably 40% by mass or less, and particularly preferably 35% by mass or less in terms of preventing cracking, flaw formation, and deformation of a three-dimensional object. The lower limit of the content of the binder resin is preferably 1% by mass or greater and more preferably 3% by mass or greater.

Heat treatments such as sintering must not be applied to the secondary particles.

The method for forming a powder layer is not particularly limited and may be appropriately selected depending on the intended purpose. Examples of the method include a method using, for example, a known counter rotating mechanism (counter roller) employed in a selective laser sintering method described in Japanese Patent No. 3607300, a method for spreading a powder into a thin layer with such a member as a brush, a roller, and a blade, a method for pressing the surface of a powder with a pressing member to spread the powder into a thin layer, and a method using a known powder additive manufacturing apparatus.

When forming a powder layer of the secondary particles over a support using, for example, the counter rotating mechanism (counter roller), the brush, roller, or blade, or the pressing member, for example, the counter rotating mechanism, the brush, the roller, or the blade, or the pressing member places the secondary particles over the support that is disposed within an outer frame (may also be referred to as, for example, "mold", "hollow cylinder", or "tubular structure") in a manner that the support can move upward and downward while sliding against the inner wall of the outer frame, to form a powder layer. When a support that can move upward and downward within the outer frame is used as the support, it is preferable to dispose the support at a position slightly lower than the upper-end opening of the outer frame, i.e. at a position lower by an amount corresponding to the thickness of a layer of a powder, and place a powder over the support.

An automatic, quick manner using the known powder additive manufacturing apparatus may be employed to form a powder layer. Typically, the powder additive manufacturing apparatus includes a recoater configured to laminate layers of the secondary particles, a movable supplying tank configured to supply the secondary particles onto the support, and a movable forming tank in which layers of the secondary particles are formed and laminated. The powder additive manufacturing apparatus can dispose the surface of the supplying tank slightly above the surface of the forming tank by lifting up the supplying tank, by lifting down the forming tank, or by both. Therefore, the powder additive manufacturing apparatus can place the secondary particles in the form of a layer and form a powder layer by actuating the recoater from the supplying tank side, and can laminate powder layers by repeatedly moving the recoater.

The average thickness of a powder layer is not particularly limited and may be appropriately selected depending on the intended purpose. The average thickness per layer is preferably 10 micrometers or greater but 200 micrometers or less, and more preferably 30 micrometers or greater but 100 micrometers or less.

### <Applying step and applying unit>

The applying step is a step of applying a liquid for dissolving the binder resin to the layer formed in the forming step, and is performed by the applying unit.

In the applying step, the binder resin contained in the secondary particles is dissolved to bring back the secondary particles to the primary particles, to cause the primary particles to fill the gaps between the secondary particles. As a result, the region to which the liquid is applied is solidified by the binder resin, and is homogenized through shape disintegration of the secondary particles. This makes it possible to reduce voids or unsolidified regions from the region to which the liquid is applied. Moreover, roughness in the planar direction due to the secondary particles can be reduced from the edges of the region to which the liquid is applied. This makes it possible to produce an object with a high accuracy.

The applying step is not particularly limited and may be appropriately selected depending on the intended purpose so long as the applying step is a step of applying the liquid for dissolving the binder resin contained in the secondary particles to a predetermined region.

Examples of the method for applying the liquid to a predetermined region include a dispenser method, a spray method, and an inkjet method.

Among these methods, the dispenser method has excellent liquid droplet quantitativity, but has a small coating area coverage. The spray method can form a minute jet of materials easily and has a wide coating area coverage and excellent coatability, but has a poor liquid droplet quantitativity and has scattering of the secondary particles due to a spray current.

Hence, the inkjet method is particularly preferable. The inkjet method is preferable because the inkjet method has a liquid droplet quantitativity better than the liquid droplet quantitativity of the spray method, has a coating area coverage greater than the coating area coverage of the dispenser method, and can form a complicated three-dimensional shape with a good accuracy efficiently.

When employing the inkjet method, the applying unit includes nozzles through which the liquid can be applied to a predetermined region by the inkjet method. Nozzles (discharging heads) of a known inkjet printer can be suitably used as the nozzles, and the inkjet printer can be suitably used as the applying unit. Preferable examples of the inkjet printer include SG7100 available from Ricoh Company, Ltd. The inkjet printer is preferable because the inkjet printer can realize rapid coating because the inkjet printer can drop the liquid from a head in a large amount at a time and coat a large area.

### <<Liquid>>

The liquid is not particularly limited and may be appropriately selected depending on the intended purpose so long as the liquid can dissolve the binder resin in the secondary particles.

The liquid contains a solvent, preferably contains a resin and inorganic particles, and further contains other components as needed.

### -Solvent-

The solvent is not particularly limited and may be appropriately selected depending on the intended purpose. Examples of the solvent include water, alcohols containing two or more but seven or less carbon atoms, ketones containing three or more but eight or less carbon atoms, cyclic ethers, and polyethers. One of these solvents may be used alone or two or more of these solvents may be used in combination.

Examples of the alcohols containing two or more but seven or less alcohols include ethyl alcohol, isopropanol, and n-butanol.

Examples of the ketones containing three or more but eight or less carbon atoms include acetone and ethyl methyl ketone.

Examples of the cyclic ethers include tetrahydrofuran.

Examples of the polyethers include dimethoxy ethanol, and dimethoxy diethylene glycol.

The content of the solvent in the liquid is not particularly limited and may be appropriately selected depending on the intended purpose.

When the liquid contains a resin, the content of the solvent in the liquid is preferably 60% by mass or greater but 95% by mass or less, and more preferably 70% by mass or greater but 90% by mass or less.

When the liquid is free of a resin, the content of the solvent in the liquid is preferably 50% by mass or greater but 99% by mas or less, and more preferably 70% by mass or greater but 90% by mass or less.

The content of the water in the liquid is preferably as less as possible. The content of the water in the liquid is preferably less than 45% by mass and preferably less than 5% by mass.

### -Resin-

The resin is not particularly limited and may be appropriately selected depending on the intended purpose. Examples of the resin include acrylic, maleic acid, silicone, butyral, polyester, polyvinyl acetate, vinyl chloride/vinyl acetate copolymers, polyethylene, polypropylene, polyacetal, ethylene/vinyl acetate copolymers, ethylene/(meth)acrylic acid copolymers, α-olefin/maleic anhydride copolymers, esterified products of α-olefin/maleic anhydride copolymers, polystyrene, poly(meth)acrylic acid ester, copolymers of a-olefin/maleic anhydride/vinyl group-containing monomer, styrene/maleic anhydride copolymers, styrene/(meth) acrylic acid ester copolymers, polyamide, epoxy resins, xylene resins, ketone resins, petroleum resins, rosin or derivatives of rosin, coumarone-indene resins, terpene resins, polyurethane resins, synthetic rubbers such as styrene/butadiene rubbers, polyvinyl butyral, nitrile rubbers, acrylic rubbers, and ethylene/propylene rubbers, and nitrocellulose. One of these resins may be used alone or two or more of these resins may be used in combination.

The resin may also be an organic or organometallic polymeric compound having a low hydrophilicity.

The content of the resin in the liquid is not particularly limited, may be appropriately selected depending on the intended purpose, and is preferably 5% by mass or greater but 40% by mass or less and more preferably 10% by mass or greater but 30% by mass or less in terms of controlling the viscosity of the liquid to within a predetermined range.

### -Inorganic particles-

It is preferable that the liquid contain inorganic particles having a central particle diameter at which nozzles are not clogged. With the inorganic particles contained in the liquid, when the liquid is applied to a predetermined region of a powder layer, the inorganic particles are placed in the gaps between the particles of the powder in the predetermined region. As a result, the density of a three-dimensional object to be obtained is improved.

It is preferable that the constituent materials of the inorganic particles be the same as the raw material of the ceramic, and more preferably zirconia, alumina, mullite (aluminosilicate mineral), tungsten carbide, silicon carbide, silicon nitride, and aluminum nitride.

The central particle diameter of the inorganic particles is not particularly limited, may be appropriately selected depending on the intended purpose so long as the central particle diameter of the inorganic particles is smaller than the central particle diameter of the raw material of the ceramic, and is preferably 0.05 micrometers or greater but 0.5 micrometers or less.

The central particle diameter of the inorganic particles has the same meaning as the cumulative 50% volume-based particle diameter based on a volume-based particle size distribution and can be measured with, for example, a laser diffraction/scattering particle size measuring instrument (available from Horiba, Ltd., LA-300).

The content of the inorganic particles is not particularly limited, may be appropriately selected depending on the intended purpose, and is preferably 10% by mass or greater, more preferably 20% by mass or greater, and yet more preferably 30% by mass or greater relative to the total amount of the liquid. The upper limit of the content of the inorganic particles is preferably 60% by mass or less and more preferably 50% by mass or less.

### -Other components-

The other components are not particularly limited and may be appropriately selected depending on the intended purpose. Examples of the other components include a dispersant and a surfactant.

### <Other steps>

The other steps are not particularly limited and may be appropriately selected depending on the intended purpose. Examples of the other steps include a heat treatment step. Examples of the heat treatment step include drying, degreasing, and sintering.

Heat treatment can be performed in a manner suited to the materials. Because a green body produced typically has a characteristic shape, it is typical not to use a pressurizing unit in order to prevent disintegration of the shape. Although pressure sintering (hot press) is often employed in sintering, the present disclosure does not employ pressure sintering and is basically assumed for pressureless sintering.

In the present disclosure, the method for producing a three-dimensional object, which is a ceramic, produces the three-dimensional object after the raw material of the three-dimensional object is bound temporarily. In this case, for example, even when a resin is used for binding, only a small amount of the resin is needed for binding, making it possible to suppress volume shrinkage through sintering. As a result, when producing a large structural part, it is possible to prevent cracking of the part during sintering, and hence produce a model having dimensions practically usable as, for example, a structural part.

Three-dimensional object production of a green body, which is formed through repetition of the forming step and the applying step, is completed in a state that the green body is buried in the powder.

At the instant, the green body contains the solvent much, and hence has a low strength and a poor handleability. Therefore, the green body needs drying.

Using, for example, an infrared heater, layers may be dried one by one after the forming step and applying step of each layer.

The drying method is not particularly limited and any known method may be used. However, there is a need for selecting a method that does not cause cracking or deformation depending on the kind of the solvent. When, for example, ethanol is used as the solvent, it is preferable to dry the green body at 50 degrees C for 24 hours.

The degreasing method is not particularly limited and any known method may be used. When, for example, kaolin is used as the primary particles, the green body can be suitably degreased through heat treatment at 500 degrees C for three hours in an atmosphere purged with nitrogen. However, the degreasing method is not limited to the above.

The sintering method is not particularly limited and any known method may be used. It is preferable to sinter the green body at normal pressure in order to maximize the effect of the present disclosure. There is a need for adjusting the atmosphere, the heat treatment temperature, and the heat treatment time depending on the material. When, for example, alumina is used as the primary particles, heat treatment at 1,550 degrees C for three hours in an argon atmosphere is suitable. Optimization of conditions is needed because raise in the heat treatment temperature enables densification but instead has disadvantages such as strength degradation and deformation due to formation of coarse particles.

As the sintering method, for example, an electric current sintering method by, for example, pulse electroheating is suitable. However, the sintering method is not limited to this method.

### (Three-dimensional object)

A three-dimensional object of the present disclosure is produced by the three-dimensional object producing method of the present disclosure or the three-dimensional object producing apparatus of the present disclosure.

Applications of the three-dimensional object are not particularly limited and may be appropriately selected depending on the intended purpose. Examples of the applications of the three-dimensional object include gauges and operation panels of, for example, vehicles, office machines, electric and electronic machines, and cameras, various parts, daily necessities, and trial products.

Examples of the three-dimensional object producing method and three-dimensional object producing apparatus of the present disclosure will be described with reference to the drawings.

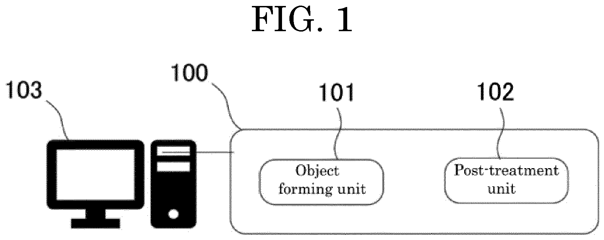

FIG. 1 is a conceptual diagram relating to production of a three-dimensional object.

FIG. 1 illustrates a three-dimensional object producing apparatus 100 and a computer 103. The three-dimensional object producing apparatus 100 includes an object forming unit 101 and a post-treatment unit 102.

In three-dimensional object production, the computer 103 sends 3D data of a three-dimensional object to the object forming unit 101, and the object forming unit 101 forms an object based on the 3D data. Subsequently, the post-treatment unit 102 applies post-treatment such as heat treatment, to complete a three-dimensional object.

Examples of the three-dimensional object producing method and three-dimensional object producing apparatus will be described below.

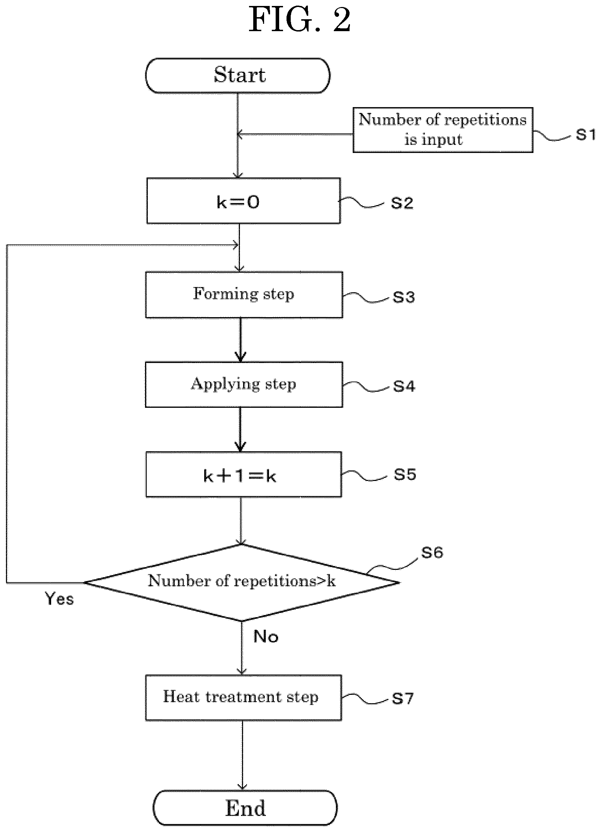

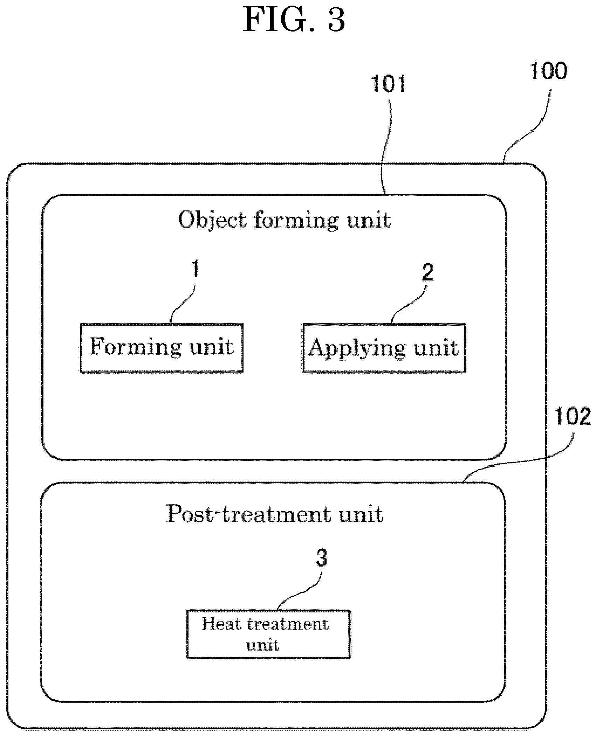

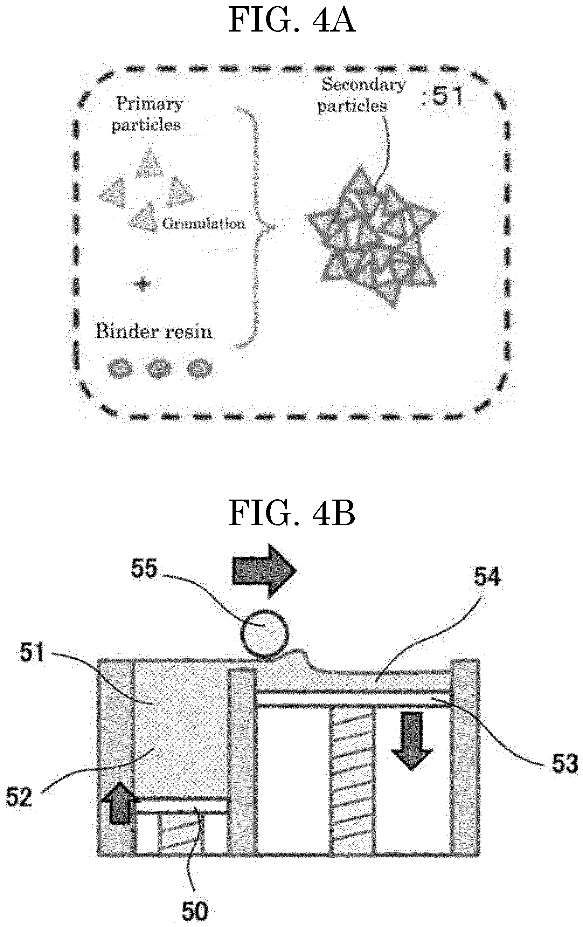

FIG. 2 is a flowchart illustrating an example of a flow of a process of the three-dimensional object producing method. The flow of the process of the three-dimensional object producing method of the present disclosure illustrated in FIG. 2 will be described below with reference to FIG. 3 and FIG. 4A to FIG. 4F.

FIG. 3 is a functional block diagram illustrating an example of the three-dimensional object producing apparatus.

The three-dimensional object producing apparatus 100 of FIG. 3 includes the object forming unit 101 and the post-treatment unit 102. The object forming unit 101 includes a forming unit 1 and an applying unit 2. The post-treatment unit 102 includes a heat treatment unit 3.

FIG. 4A to FIG. 4F are schematic diagrams illustrating an example of the three-dimensional object producing method.

In the step S1, a user inputs a number of repetitions to the three-dimensional object producing apparatus 100, and the flow moves to S2.

In the step S2, the user inputs k=0 to the three-dimensional object producing apparatus 100, and the flow moves to S3.

In the step S3, the three-dimensional object producing apparatus 100 performs the forming step, and the flow moves to S4.

Before the forming step, secondary particles are granulated using primary particles containing a ceramic material, and a binder resin (see FIG. 4A).

In the forming step, a powder layer is formed using the secondary particles containing: the primary particles containing the ceramic material; and the binder resin. The forming step can be performed using, for example, the forming unit.

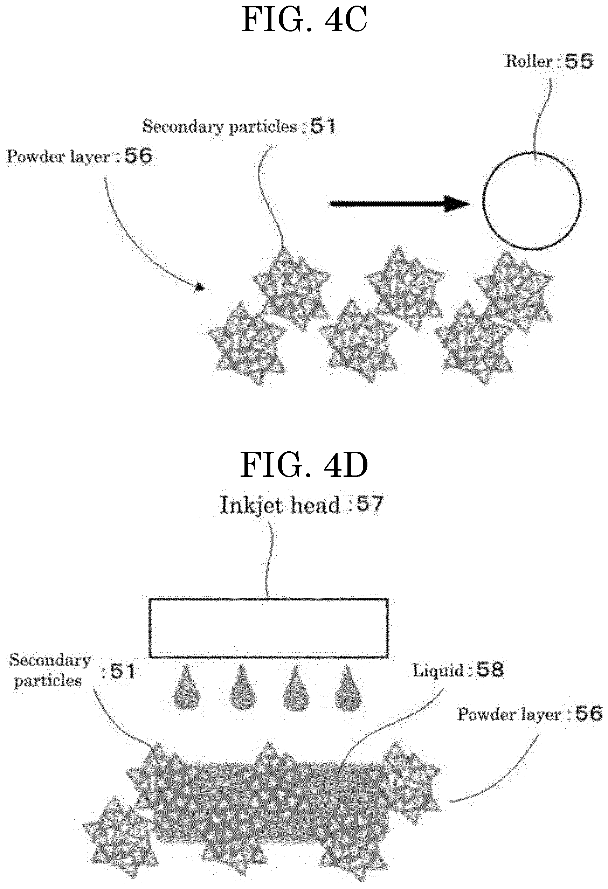

As illustrated in FIG. 4B, the forming unit includes, for example, a supplying-side powder storing tank 52 storing the secondary particles 51, a forming-side powder storing tank 54 in which a powder layer is formed, and a leveling mechanism 55. The supplying-side powder storing tank 52 includes a stage 50 that can move in the vertical direction. The forming-side powder storing tank 54 includes a stage 53 that can move in the vertical direction. When a roller serving as the leveling mechanism 55 moves from the supplying-side powder storing tank 52 to the forming-side powder storing tank 54, the secondary particles 51 in the supplying-side powder storing tank 52 move to the forming-side powder storing tank 54, to form a powder layer 56 formed of the secondary particles 51 over the stage 53 (see FIG. 4C).

In the step S4, the three-dimensional object producing apparatus 100 performs the applying step, and the flow moves to S5.

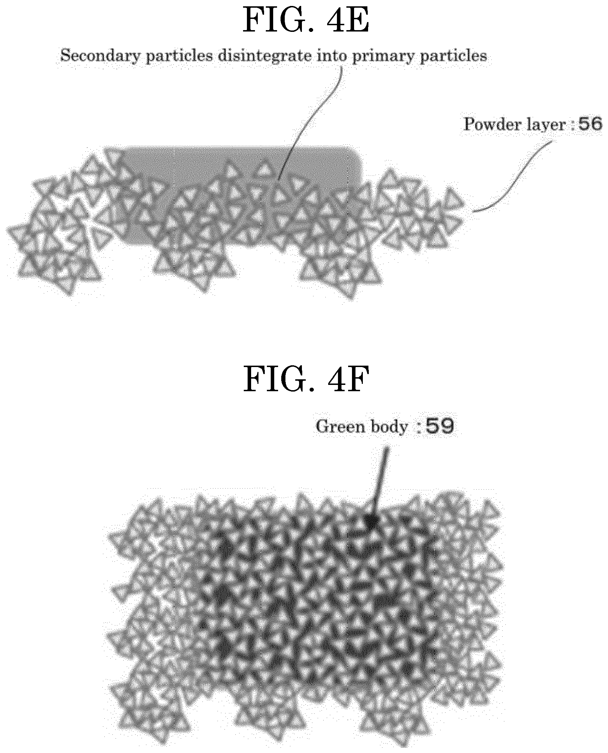

In the applying step, a liquid for dissolving the binder resin is applied to the powder layer formed in the forming step, to dissolve the binder resin contained in the secondary particles and bring back the secondary particles to the primary particles. The applying step is performed using, for example, the applying unit. As illustrated in FIG. 4D, the applying unit is, for example, an inkjet head 57. The inkjet head 57 applies a liquid 58 for dissolving the binder resin to a predetermined region of the powder layer 56. Then, as illustrated in FIG. 4E, through dissolution of the binder resin contained in the secondary particles to bring back the secondary particles to the primary particles, gaps are formed between the secondary particles and the primary particles fill the gaps. As a result, the region to which the liquid is applied is immobilized by the binder resin, and homogenized through shape disintegration of the secondary particles, making it possible to reduce voids or unsolidified regions from the region to which the liquid is applied.

In the step S5, k is incremented to k+1, and the flow moves to S6.

In the step S6, the flow moves to S3 when k is smaller than the number of repetitions, or moves to S7 when k is greater than or equal to the number of repetitions.

The forming step and the applying step are repeated until the number of layers laminated becomes a desired number. In this way, a layer-laminated structure is obtained over the stage 53. When the layer-laminated structure is dried, a green body 59 as illustrated in FIG. 4F is obtained.

In the step S7, the three-dimensional object producing apparatus 100 performs a heat treatment step, and the flow ends. In the heat treatment step, the dried green body is heated. The heat treatment step is performed using, for example, the heat treatment unit 3. Examples of the heat treatment unit 3 include a heater. In the heat treatment step, for example, removal and decomposition of the resin, and sintering of the green body may be performed simultaneously.

In the way described above, a sintered body, which is the result of sintering the raw material of a ceramic, is obtained.

### EXAMPLES

The present disclosure will be described below by way of Examples. The present disclosure should not be construed as being limited to these Examples.

### (Examples 1 to 14)

Three-dimensional objects were produced according to the flowchart illustrated in FIG. 2 and the three-dimensional object producing method illustrated in FIG. 4A to FIG. 4F.

Powders prepared in the manner described below using the materials presented in Table 1 below were used.

### <Preparation of primary particles and secondary particles>

First, the material particles (primary particles; particles of kaolin, titanium oxide, or alumina) having the predetermined central particle diameter presented in Table 1 and a binder resin (polyvinyl butyral (PVB)) were both mixed in a solvent (ethanol) and dispersed sufficiently, to prepare a slurry.

Next, the obtained slurry was granulated into a liquid droplet shape and dried using, for example, a spray granulator and a drying sintering furnace. Then as needed, the resultant was classified, to obtain secondary particles having the central particle diameter presented in Table 1.

Next, the secondary particles were sintered. The secondary particles had a three-dimensional structure in which minute primary particles mutually bound while having voids. Therefore, the secondary particles had an approximately spherical shape. The primary particles of these samples had size variation depending on, for example, the central particle diameter of the raw material particles.

The central particle diameters of the primary particles and the secondary particles were measured in the manner described below. The results are presented in Table 1.

### -Measurement of central particle diameters of primary particles and secondary particles-

The central particle diameters of the primary particles and the secondary particles were cumulative 50% particle diameters (D₅₀) based on the volume-based particle size distributions that were obtained by measuring the respective particles with a laser diffraction/scattering particle size measuring instrument (obtained from Horiba, Ltd., LA-300).

### <Liquid for dissolving binder resin>

Ethyl acetate serving as a main solvent, SN DISPERSANT 5468 (obtained from San Nopco Limited) serving as a dispersant, and as needed, the inorganic particles presented in Table 2 were added together and stirred for 24 hours. The resultant was used as the liquid for dissolving a binder resin.

### <Object production>

Objects were produced with a quick-build experimental apparatus obtained by making a binder-jet object producing apparatus (obtained from Desktop Metal, Inc.) solvent-proof partially.

The layer lamination interval was 100 micrometers. The object production model was a cube having a size of 10 mm × 10 mm × 10 mm. The liquid for dissolving a binder resin was applied to a desired region. The amount of the liquid applied was 600 dpi.

### <Degreasing and sintering>

Using an electric furnace, the objects were degreased and sintered through temperature elevation at a rate of 5 degrees C/minute to each predetermined temperature in the range of from 1,100 degrees C through 1,500 degrees C with retention at each predetermined temperature for two hours and then furnace cooling.

**Table 1**

| | Central particle diameter (D₅₀) of primary particles | Kind of primary particles | Central particle diameter (D₅₀) of secondary particles | Kind of binder resin in secondary particles | Content (% by mass) of binder resin in secondary particles |
|---|---|---|---|---|---|
| Ex. 1 | 5 micrometers | Kaolin 1 | 50 micrometers | PVB | 41 |
| Ex. 2 | 10 nm | Titanium oxide 1 | 100 nm | PVB | 41 |
| Ex. 3 | 1 micrometer | Kaolin 2 | 10 micrometers | PVB | 41 |
| Ex. 4 | 50 nm | Titanium oxide 2 | 500 nm | PVB | 41 |
| Ex. 5 | 500 nm | Kaolin 3 | 5 micrometers | PVB | 41 |
| Ex. 6 | 5 micrometers | Kaolin 1 | 50 micrometers | PVB | 41 |
| Ex. 7 | 500 nm | Kaolin 3 | 5 micrometers | PVB | 41 |
| Ex. 8 | 500 nm | Kaolin 3 | 5 micrometers | PVB | 41 |
| Ex. 9 | 5 micrometers | Alumina 1 | 50 micrometers | PVB | 41 |
| Ex. 10 | 5 micrometers | Alumina 1 | 50 micrometers | PVB | 41 |
| Ex. 11 | 5 micrometers | Kaolin 1 | 50 micrometers | PVB | 40 |
| Ex. 12 | 500 nm | Alumina 2 | 5 micrometers | PVB | 20 |
| Ex. 13 | 500 nm | Alumina 2 | 5 micrometers | PVB | 10 |
| Ex. 14 | 500 nm | Alumina 2 | 5 micrometers | Acrylic resin | 41 |

**Table 2**

| | Central particle diameter (D₅₀) of inorganic particles in liquid | Content (% by mass) of inorganic particles in liquid | Kind of inorganic particles |
|---|---|---|---|
| Ex. 1 | - | - | - |
| Ex. 2 | - | - | - |
| Ex. 3 | - | - | - |
| Ex. 4 | - | - | - |
| Ex. 5 | - | - | - |
| Ex. 6 | 1 micrometer | 15 | Mullite 1 |
| Ex. 7 | 1 micrometer | 20 | Mullite 1 |
| Ex. 8 | 500 nm | 20 | Mullite 2 |
| Ex. 9 | - | - | - |
| Ex. 10 | - | - | - |
| Ex. 11 | 1 micrometer | 15 | Alumina A |
| Ex. 12 | 50 nm | 20 | Alumina B |
| Ex. 13 | 50 nm | 40 | Alumina B |
| Ex. 14 | 50 nm | 40 | Alumina B |

The details of the materials in Table 1 and Table 2 are as follows.
- Primary particles-
   *Kaolin 1: HYDRITE R obtained from Hayashi Kasei Co., Ltd., with a central particle diameter (D₅₀) of 5 micrometers
   *Kaolin 2: HYDRITE SB 100 obtained from Hayashi Kasei Co., Ltd., with a central particle diameter (D₅₀) of 1 micrometer
   *Kaolin 3: ECKALITE 1, obtained from Hayashi Kasei Co., Ltd., with a central particle diameter (D₅₀) of 500 nm
   *Titanium oxide 1: ST-01 obtained from Ishihara Sangyo Kaisha, Ltd., with a central particle diameter (D₅₀) of 10 nm
   *Titanium oxide 2: a custom-made product of ST SERIES obtained from Ishihara Sangyo Kaisha, Ltd., with a central particle diameter (D₅₀) of 50 nm
   *Alumina 1: AA SERIES obtained from Sumitomo Chemical Company, Limited, with a central particle diameter (D₅₀) of 5 micrometers
   *Alumina 2: AA SERIES obtained from Sumitomo Chemical Company, Limited, with a central particle diameter (D₅₀) of 500 nm
- Binder resin-
   *PVB (polyvinyl butyral, ESLEC B obtained from Sekisui Chemical Co., Ltd.)
   *Acrylic resin (acrylic polyol obtained from Taisei Fine Chemical Co. Ltd.)
- Inorganic particles-
   *Mullite 1: a custom-made product of KM SERIES obtained from KCM Corporation, with a central particle diameter (D₅₀) of 1 micrometer
   *Mullite 2: a custom-made product of KM SERIES obtained from KCM Corporation, with a central particle diameter (D₅₀) of 500 nm
   *Alumina A: AKP SERIES obtained from Sumitomo Chemical Company, Limited, with a central particle diameter (D₅₀) of 1 micrometer *Alumina B: AKP SERIES obtained from Sumitomo Chemical Company, Limited, with a central particle diameter (D₅₀) of 50 nm

### (Comparative Examples 1 to 6)

Objects were produced by a common binder jet method of producing objects by repeatedly applying a liquid (pure water) in which polyvinyl alcohol (PVA) presented in Table 3 was added as a binder resin to a commercially available ceramic material (alumina or kaolin) presented in Table 3.

As needed, inorganic particles presented in Table 3 were added in the liquid (pure water) in which polyvinyl alcohol (PVA) was added as a binder resin.

In Comparative Examples 1 to 6, commercially available products were used as ceramic materials. Therefore, no secondary particles were formed (primary particles).

**Table 3**

| | Central particle diameter (D₅₀) of primary particles of powder | Powder composition | Kind of binder resin in liquid | Content (% by mass) of binder resin in liquid | Central particle diameter (D₅₀) of inorganic particles in liquid | Content (% by mass) of inorganic particles in liquid | Kind of inorganic particles 30 |
|---|---|---|---|---|---|---|---|
| Comp. Ex. 1 | 50 micrometers | Alumina 3 | PVA | 20 | - | - | - |
| Comp. Ex. 2 | 20 micrometers | Kaolin 4 | PVA | 20 | - | - | - |
| Comp. Ex. 3 | 20 micrometers | Alumina 4 | PVA | 20 | 50 nm | 20 | Alumina B |
| Comp. Ex. 4 | 5 micrometers | Alumina 1 | PVA | 50 | - | - | _35 |
| Comp. Ex. 5 | 5 micrometers | Alumina 1 | PVA | 50 | 50 nm | 20 | Alumina B |
| Comp. Ex. 6 | 1 micrometer | Alumina 5 | PVA | 50 | 50 nm | 20 | Alumina B |

The details of the materials in Table 3 are as follows.
- Powder (primary particles)-
   *Alumina 1: AA SERIES obtained from Sumitomo Chemical Company, Limited, with a central particle diameter (D₅₀) of 5 micrometers
   *Alumina 3: AA SERIES obtained from Sumitomo Chemical Company, Limited, with a central particle diameter (D₅₀) of 50 micrometers
   *Alumina 4: AA SERIES obtained from Sumitomo Chemical Company, Limited, with a central particle diameter (D₅₀) of 20 micrometers
   *Alumina 5: AA SERIES obtained from Sumitomo Chemical Company, Limited, with a central particle diameter (D₅₀) of 1 micrometer
   *Kaolin 4: a product obtained by granulating HYDRITE SB 100S obtained from Hayashi Kasei Co., Ltd. in house, with a central particle diameter (D₅₀) of 20 micrometers
- Binder resin-
   *PVA: SERVOL obtained from Sekisui Chemical Co., Ltd.
- Inorganic particles-
   *Alumina B: AKP SERIES obtained from Sumitomo Chemical Company, Limited, with a central particle diameter (D₅₀) of 50 nm

Next, various properties of each three-dimensional object obtained were evaluated in the manners described blow. The results are presented in Table 4.

### <Evaluation of conditions of three-dimensional object after degreasing and sintering>

Whether, for example, any abnormal deformation or cracking occurred in the three-dimensional object obtained through the degreasing and sintering steps was observed and evaluated according to the criteria described below.

### [Evaluation criteria]

B: No abnormal deformation such as distortion occurred.
C: Deformation such as distortion that was hardly visually recognizable but measured by, for example, length measurement occurred.
D: Visually obvious deformation and cracking occurred.

### <Arithmetic mean surface roughness Ra>

The surface roughness of each three-dimensional object obtained was measured as an indicator for evaluating the accuracy of the three-dimensional object. As the surface roughness, an arithmetic mean surface roughness Ra of the surface of each three-dimensional object was measured according to JIS B0601:2001 and evaluated according to the criteria described below.

### [Evaluation criteria]

A: The arithmetic mean surface roughness Ra was 30 micrometers or less.
B: The arithmetic mean surface roughness Ra was greater than 30 micrometers but 80 micrometers or less.
C: The arithmetic mean surface roughness Ra was greater than 80 micrometers but 100 micrometers or less.
D: The arithmetic mean surface roughness Ra was greater than 100 micrometers.

### <Porosity>

The porosity of each three-dimensional object obtained was measured as an indicator for evaluating the finish of the three-dimensional object. Archimedes method using a balance was employed for measuring the porosity. Specifically, the weight (A) of the solid was measured in the atmosphere, and then the weight (B) thereof in a displacement liquid (water) was measured. The porosity was calculated according the formula: [(B)-(A)]/(A)×100 and evaluated according to the criteria described below.

### [Evaluation criteria]

A: The porosity was 1% or less.
B: The porosity was greater than 1% but 10% or less.
C: The porosity was greater than 10% but 20% or less.
D: The porosity was greater than 20%.

**Table 4**

| | Conditions of 3D object after degreasing and sintering | Arithmetic mean surface roughness | Porosity |
|---|---|---|---|
| Ex. 1 | B | B | B |
| Ex. 2 | B | A | B |
| Ex. 3 | B | B | B |
| Ex. 4 | B | A | B |
| Ex. 5 | B | B | B |
| Ex. 6 | B | B | A |
| Ex. 7 | B | A | A |
| Ex. 8 | B | A | A |
| Ex. 9 | B | B | B |
| Ex. 10 | B | B | B |
| Ex. 11 | B | B | A |
| Ex. 12 | B | A | A |
| Ex. 13 | B | A | A |
| Ex. 14 | B | B | B |
| Comp. Ex. 1 | B | D | D |
| Comp. Ex. 2 | B | C | D |
| Comp. Ex. 3 | B | C | D |
| Comp. Ex. 4 | C | B | D |
| Comp. Ex. 5 | C | B | D |
| Comp. Ex. 6 | D | - | - |

| | | | |
|---|---|---|---|
| *In Table 4, "-" in the "arithmetic mean surface roughness" field and "-" in the "porosity" field of Comparative Example 6 mean that the values were unmeasurable. | | | |

Aspects of the present disclosure are, for example, as follows.
<1> A three-dimensional object producing method for producing a three-dimensional object using primary particles containing at least a ceramic material, the three-dimensional object producing method including:
   forming a layer using secondary particles containing the primary particles and a binder resin; and
   applying a liquid for dissolving the binder resin to the layer formed in the forming,
   wherein a central particle diameter of the primary particles is 5 micrometers or less.
<2> The three-dimensional object producing method according to <1>,
   wherein the central particle diameter of the primary particles is 0.01 micrometers or greater but 1 micrometer or less.
<3> The three-dimensional object producing method according to <1> or <2>,
   wherein the liquid contains inorganic particles.
<4> The three-dimensional object producing method according to <3>,
   wherein a central particle diameter of the inorganic particles is 0.05 micrometers or greater but 0.5 micrometers or less.
<5> The three-dimensional object producing method according to <3> or <4>,
   wherein a content of the inorganic particles in the liquid is 20% by mass or greater.
<6> The three-dimensional object producing method according to any one of <3> to <5>,
   wherein the primary particles or the inorganic particles contain at least one selected from the group consisting of alumina, silicon nitride, mullite, zirconia, silicon carbide, tungsten carbide, and aluminum nitride.
<7> The three-dimensional object producing method according to any one of <1> to <6>,
   wherein a central particle diameter of the secondary particles is 50 micrometers or less.
<8> The three-dimensional object producing method according to <7>,
   wherein a content of the binder resin in the secondary particles is 40% by mass or less.
<9> The three-dimensional object producing method according to any one of <1> to <8>,
   wherein the applying includes applying the liquid by an inkjet method.
<10> The three-dimensional object producing method according to any one of <1> to <9>, further including
   volatilizing the liquid.
<11> A three-dimensional object producing apparatus configured to produce a three-dimensional object using primary particles containing at least a ceramic material, the three-dimensional object producing apparatus including:
   a forming unit configured to form a layer using secondary particles containing the primary particles and a binder resin; and
   an applying unit configured to apply a liquid for dissolving the binder resin to the layer formed by the forming unit,
   wherein a central particle diameter of the primary particles is 5 micrometers or less.
<12> A three-dimensional object obtained by the three-dimensional object producing method according to any one of <1> to <10> or the three-dimensional object producing apparatus according to <11>, or both.

The three-dimensional object producing method according to any one of <1> to <10>, the three-dimensional object producing apparatus according to <11>, and the three-dimensional object according to <12> can solve the various problems in the related art and achieve the object of the present disclosure.

## Claims

**1.** A three-dimensional object producing method for producing a three-dimensional object using primary particles containing at least a ceramic material, the three-dimensional object producing method comprising:
forming a layer using secondary particles containing the primary particles and a binder resin; and
applying a liquid for dissolving the binder resin to the layer formed in the forming,
wherein a central particle diameter of the primary particles is 5 micrometers or less.

**2.** The three-dimensional object producing method according to claim 1,
wherein the central particle diameter of the primary particles is 0.01 micrometers or greater but 1 micrometer or less.

**3.** The three-dimensional object producing method according to claim 1 or 2,
wherein the liquid contains inorganic particles.

**4.** The three-dimensional object producing method according to claim 3,
wherein a central particle diameter of the inorganic particles is 0.05 micrometers or greater but 0.5 micrometers or less.

**5.** The three-dimensional object producing method according to claim 3 or 4,
wherein a content of the inorganic particles in the liquid is 20% by mass or greater.

**6.** The three-dimensional object producing method according to any one of claims 3 to 5,
wherein the primary particles or the inorganic particles contain at least one selected from the group consisting of alumina, silicon nitride, mullite, zirconia, silicon carbide, tungsten carbide, and aluminum nitride.

**7.** The three-dimensional object producing method according to any one of claims 1 to 6,
wherein a central particle diameter of the secondary particles is 50 micrometers or less.

**8.** The three-dimensional object producing method according to claim 7,
wherein a content of the binder resin in the secondary particles is 40% by mass or less.

**9.** The three-dimensional object producing method according to any one of claims 1 to 8,
wherein the applying comprises applying the liquid by an inkjet 10. The three-dimensional object producing method according to any one of claims 1 to 9, further comprising
volatilizing the liquid.

**11.** A three-dimensional object producing apparatus configured to produce a three-dimensional object using primary particles containing at least a ceramic material, the three-dimensional object producing apparatus comprising:
a forming unit configured to form a layer using secondary particles containing the primary particles and a binder resin; and
an applying unit configured to apply a liquid for dissolving the binder resin to the layer formed by the forming unit,
wherein a central particle diameter of the primary particles is 5 micrometers or less.

**12.** A three-dimensional object obtained by the three-dimensional object producing method according to any one of claims 1 to 10 or the three-dimensional object producing apparatus according to claim 11, or both of the three-dimensional object producing method according to any one of claims 1 to 10 and the three-dimensional object producing apparatus according to claim 11.
